# EUROPÄISCHE PATENTSCHRIFT

(11) **EP 0 363 593 B1**
(45) Veröffentlichungstag und Bekanntmachung des Hinweises auf die Patenterteilung: **29.06.1994**
(21) Anmeldenummer: 89114547.6
(22) Anmeldetag: 07.08.1989
(51) Int. Cl.: B29C 51/42, B29C 51/02, B29C 51/36

(54) **Verfahren und Vorrichtung zur Herstellung von Formteilen oder Gegenständen für Kraftfahrzeuge**
Method and apparatus for making shaped parts or objects for motor vehicles
Procédé et dispositif de fabrication de pièces ou objets moulés pour véhicules

(30) Priorität: 11.10.1988 DE 3834648
(43) Veröffentlichungstag der Anmeldung: 18.04.1990
(73) Patentinhaber: ALKOR GMBH KUNSTSTOFFE, D-81451 München (DE)
(72) Erfinder: Tesche, Bernd, Dr., D-5650 Solingen 1 (DE); Landler, Josef, Chem.-Ing., D-8190 Wolfratshausen (DE)

(56) Entgegenhaltungen:
- EP-A- 0 045 972
- EP-A- 0 288 728
- EP-A- 0 288 733
- WO-A-85/02142
- CH-A- 554 230
- DE-A- 2 022 465
- DE-U- 8 706 204
- FR-A- 2 133 485
- FR-A- 2 647 051
- US-A- 4 244 915
- PATENT ABSTRACTS OF JAPAN, Band 8, Nr. 189 (M-321)[1626], 30. August 1984;& JP-A-59 79 727 (IKEDA BUTSUSAN K.K.) 09-05-1984

## Beschreibung

Die vorliegende Erfindung betrifft ein Verfahren zur Herstellung von Formteilen oder Gegenständen für Kraftfahrzeuge, wobei Kunststoffbahnen in eine Negativtiefziehform eingebracht und in der Negativtiefziehform unter Narbgebung und/oder Oberflächendekoration verformt werden und die Narbgebung und/oder Oberflächendekoration durch eine poröse, luftdurchlässige, vorzugsweise mikroporöse, luftdurchlässige Formoberfläche aufweisende Negativtiefziehform oder durch eine nicht poröse, genarbte oder eine Oberflächendekoration in Negativform enthaltende Formoberfläche erfolgt.

Gemäß der Erfindung gelingt es durch eine bestimmte Verfahrensführung dieses Verfahren anstelle einer Kunststoffbahn mit einer aus einem Extruder kommenden Kunststoffschmelzbahn durchzuführen und selbst komplizierte Formteile oder Gegenstände für Kraftfahrzeuge herzustellen.

Ein Negativtiefziehverfahren und eine entsprechende Vorrichtung zur Herstellung von Formteilen nach dem Negativtiefziehverfahren sind in der zum Zeitpunkt der Hinterlegung dieser Patentanmeldung noch nicht veröffentlichten Patentanmeldung P 37 14 366.2 beschrieben. Nach diesem Verfahren werden Kunststoffolien, Kunststoffbahnen oder Kunststoffplatten, die bereits in den vorausgehenden Verfahren hergestellt sind, wieder erwärmt und auf die Verformungstemperatur gebracht sowie im Negativtiefziehverfahren verformt.

Weiterhin ist ein Verfahren zum Herstellen von dünnwandigen Formlingen aus thermoplastischen Kunststoffen aus der DE-AS 22 52 219 bekannt. Nach diesem Verfahren wird der thermoplastische Kunststoff durch Erhitzen bis zur Fließfähigkeit in stark plastischem Zustand plastifiziert und durch Gießen aus der Düse in die Form eines Bandes extrudiert.

Dieses Band wird zum Stabilisieren an beiden Oberflächen mit wärmeleitenden, auf vorbestimmte Temperatur gehaltene Flächen in Berührung gebracht, dabei in beiden Bandoberflächenbereichen bis zu deren Tragfähigkeit abgekühlt und verfestigt, das so stabilisierte Band auf dem Wege zur Thermoverformung in beiden Oberflächenbereichen durch Aufwärmung durch Wärmeleitung von dem auf Extrudertemperatur gebliebenen Bandinneren her konditioniert und beim Thermoformen seine beiden vorgekühlten und konditionierten Oberflächenbereiche entsprechenden Oberflächen der herzustellenden Formlinge schalenartig vorgeformt. Der Formling wird infolge seiner stark plastifizierten Bandinnenschicht zwischen den vorgeformten Schalen durch Formdruck infolge der relativ zueinander bewegten Schalen zur Ausbildung der Formlingswand verteilt und durch Kühlen verfestigt. Dieses Verfahren hat den Nachteil beim Extrudieren relativ dünner Bänder und insbesondere bei der Herstellung dünnwandig ausgebildeter Formlinge, daß die Formlingswand über die gesamte Fläche eine Streifenbildung aufweist. Weiterhin ist das beidseitig abgekühlte Band, das nur noch ein plastifiziertes Bandinneres aufweist, für das Negativtiefziehverfahren nachteilig, da die Feinheiten der Narbgebung und/oder Oberflächendekoration nicht mehr erzielt werden können und darüber hinaus die Gefahr einer Beschädigung besteht.

Aus der WO-85/02142 ist weiterhin eine Vorrichtung zur Herstellung von Formteilen nach dem Extrusionsverfahren in Kombination mit einem Verformungsverfahren bekannt, wobei die Vorrichtung einen Extruder in Kombination mit einem Werkzeug und Gegenwerkzeug aufweist. Das aus dem Extruder austretende Material wird durch Walzen mit einer 60 °C niedrigeren Temperatur auf eine geringere Materialdicke ausgewalzt und erst dann vorzugsweise zu Behältern durch ein Werkzeug und Gegenwerkzeug verformt. Eine bestimmte Temperaturführung zwischen der Ober- und Unterseite der Folie und eine bestimmte Temperaturführung der Werkzeugteile ist nicht vorgesehen. Mikroporöse Negativtiefziehformen werden nach WO-85/02142 nicht verwendet.

Ziel und Aufgabe der vorliegenden Erfindung war es daher, das Negativtiefziehverfahren gegenüber dem Stand der Technik zu verbessern. Weiterhin sollte eine Verbesserung bei den so hergestellten Formteilen oder Gegenständen erzielt werden. Das Verfahren sollte optimiert werden und die bei dem Extrusions-Thermoverformverfahren vorhandenen Nachteile sollten vermieden werden.

Erfindungsgemäß wurde festgestellt, daß diesen Zielen und Aufgaben ein Verfahren zur Herstellung von Formteilen oder Gegenständen für Kraftfahrzeuge gerecht wird, bei dem Kunststoffbahnen in eine Negativtiefziehform eingebracht und in der Negativtiefziehform unter Narbgebung und/oder Oberflächendekoration verformt werden und die Narbgebung und/oder Oberflächendekoration durch eine poröse, luftdurchlässige, vorzugsweise mikroporöse, luftdurchlässige Formoberfläche aufweisende Negativtiefziehform oder durch eine nicht poröse, genarbte oder eine Oberflächendekoration in Negativform enthaltende Formoberfläche erfolgt. Gemäß der Erfindung wird anstelle einer Kunststoffbahn eine aus einem Extruder (1) oder einer ähnlichen Plastifiziervorrichtung, vorzugsweise aus einem Breitschlitzextruder austretende Kunststoffschmelzbahn (7) verwendet, dabei die der Negativtiefziehform (2) abgewandte Fläche der Kunststoffschmelzbahn einer Vorkühlung unterworfen und eine Temperaturdifferenz zwischen der heißeren, der Negativtiefziehform zugewandten Fläche der Kunststoffschmelzbahn und der der Negativtiefziehform abgewandten Fläche der Kunststoffschmelzbahn von 4 bis 37 K, vorzugsweise 10 bis 25 K, eingestellt, so daß sich auf der Negativtiefziehform abgewandten Fläche eine selbsttragende Schmelzhaut bildet, wobei zwischen der Temperatur der Kunststoffschmelzbahn und der kälteren Negativtiefziehform ein Temperaturunterschied von mehr als 30 K, vorzugsweise mehr als 80 K, eingestellt wird und die Kunststoffschmelzbahn durch ein mindestens zweiteiliges Werkzeug (5, 6), das als ein Werkzeugteil (5) mindestens eine Negativtiefziehform und als mindestens zweites Werkzeugteil (6) ein Gegenwerkzeug und/oder Stempel (3) und/oder einen Halte-, Abdicht- und/oder Spannrahmen enthält, geführt, eingespannt, gehalten und/oder abgedichtet und abgetrennt sowie unter Verwendung der Negativtiefzieh-form und eines Druckunterschiedes, vorzugsweise Unterdruck, sowie unter Ausnutzung der Wärmekapazität der Kunststoffschmelzbahn geformt wird, wobei die Schmelzbahn die mikroporöse, genarbte, strukturierte, geformte und/oder mit Oberflächendekoration versehene Form der Negativtiefziehform annimmt und sofort um mehr als 70 K, vorzugsweise mehr als 100 K gekühlt oder schockgekühlt wird.

Nach einer bevorzugten Ausführungsform wird die Kunststoffschmelzbahn (7) frei nach unten hängend durch das geöffnete, mindestens zweiteilige Werkzeug (5, 6), von denen das eine Werkzeugteil (5) die Negativtiefziehform und einen Rand, Halte-, Abdicht- oder Spannrahmen und/oder ein Schließteil, das andere Werkzeugteil (6) ein Gegenwerkzeug und/oder Stempel (3) und einen Rand, Halte-, Abdicht- oder Spannrahmen und/oder Gegenschließteil enthält, geführt, wobei die gekühlte Seite der Schmelzbahn (7) der Öffnung oder Formoberfläche der Negativtiefziehform abgewandt ist. Die Werkzeugteile oder dessen Ränder, Halte-, Abdicht- oder Spannrahmen oder Schließteile halten die Schmelzbahn (7), spannen diese ein und dichten ab, vorzugsweise durch Zufahren oder Schließen des Werkzeuges, das gleichzeitig oder später die im Werkzeug eingeschlossene Schmelzbahn von der außerhalb des Werkzeuges angeordneten Schmelzbahn abtrennt. Die in dem Werkzeug eingespannte und gehaltene Schmelzenbahn (7) wird unter Verwendung eines Unterdruckes und/oder durch Bewegung eines Stempels (3) oder Gegenwerkzeuges (6) zu der Negativtiefziehform vorgewölbt und nachfolgend in die Negativtiefziehform eingebracht und negativtiefgezogen.

Nach einer bevorzugten Ausführungsform wird ein Positivstempel (3) oder ein Gegenwerkzeug verwendet, der bzw. das ganz oder in Teilbereichen der Form, Formoberfläche oder Oberflächenstruktur der Negativtiefziehform angepaßt ist oder diese in Positivform aufweist. Der Stempel (3) wird in Richtung der zu verformenden Schmelzbahn (7) vorgefahren und kühlt diese rückseitig.

Vorteilhaft erfolgt die Vorkühlung der Kunststoffschmelzbahn (7) auf der der Negativtiefziehform abgewandten Fläche der Kunststoffschmelzbahn bereits unmittelbar nach dem Austritt aus dem Extruder (1) oder einem mit einer Austrittsöffnung versehenen Vorratsbehälter für die Schmelze, ohne daß die der Negativtiefziehform zugewandte Fläche der Kunststoffschmelzbahn (7) einer zusätzlichen Kühlung unterworfen wird.

Nach einer weiteren Ausführungsform wird die Kühlung der der Negativtiefziehform abgewandten Fläche der Kunststoffschmelzbahn durch eine Kühlwalze, vorzugsweise unter Mitverwendung einer gegenüberliegenden Glättwalze, und/oder in kühlendes Gas oder eine kühlende Flüssigkeit, vorzugsweise kalte Luft, durchgeführt.

Zweckmäßig arbeitet der Extruder (1) hinsichtlich der ausgestoßenen Menge des Kunststoffextrudates diskontinuierlich oder intermittierend, wobei die ausgestoßene Menge des Kunststoffextrudates auf 0 oder auf eine geringere Ausstoßmenge, vorzugsweise während der Zeit des Tiefziehvorganges, eingestellt wird.

Nach einer anderen Ausführungsform arbeitet der Extruder hinsichtlich der ausgestoßenen Menge des Kunststoffextrudates kontinuierlich und das Extrudat wird in mindestens einen mit einer Breitschlitzdüse versehenen Vorratsbehälter eingebracht und von dort diskontinuierlich, vorzugsweise durch Steuerung der Öffnungsbreite der Austrittsdüse und/oder eines auf die im Vorratsbehälter gelagerte Schmelze ausgeübten Druckes, als Schmelzbahn aufgebracht.

Die Glättwalze ist temperierbar, vorzugsweise heizbar und die Folie wird bei dem Glättvorgang auf der gewünschten Arbeitstemperatur gehalten, ohne daß eine Kühlung oder stärkere Kühlung der Schmelzbahnrückseite erfolgt.

Nach einer weiteren bevorzugten Ausführungsform wird die frei nach unten hängende Kunststoffschmelzbahn (7) durch ein Werkzeug, bestehend aus einem äußeren Werkzeug zur Einspannung, Halterung und/oder Abdichtung, das gleichzeitig als Halte- oder Spannrahmen ausgebildet ist oder dient, geführt, die Kunststoffschmelzbahn (7) auf bestimmte Abmessungen abgetrennt und durch ein in dem äußeren Werkzeug angeordnetes inneres Werkzeug, enthaltend die Negativtiefziehform und einen Stempel oder ein Gegenformwerkzeug thermoverformt.

Nach einer anderen Ausführungsform wird an der Vorderseite (zu prägende Seite durch die Negativtiefziehform) der Kunststoffschmelzbahn durch eine Auftragwalze oder durch Aufsprühen ein Lack, eine Druck- und/oder Siegelschicht aufgetragen.

Nach einer weiteren Ausführungsform wird auf die Rückseite der Kunststoffschmelzbahn (7) vor dem Negativtiefziehvorgang vor, während und/oder nach der Kühlung eine Haft- und/oder Sperrschicht in Form einer Flüssigkeit oder Dispersion aufgebracht.

Nach einer bevorzugten Ausführungsform des erfindungsgemäßen Verfahrens werden die in vorbestimmten Abmessungen durch den Halte- oder Spannrahmen oder einem äußeren Werkzeug eingespannten, gehaltenen und/oder abgedichteten und/oder abgetrennten Kunststoffbahnen karussellartig geführt, während des Transportes oder bei kurzen Transportpausen in der Negativtiefziehform verformt, wobei die Tiefziehlinge (die negativtiefgezogenen Formteile oder Gegenstände) nach der Verformung und der Öffnung des Werkzeuges in der Negativtiefziehform und/oder am Rahmen oder am äußeren Werkzeug verbleiben und während des Weitertransportes zusätzlichen Arbeitsgängen unterworfen werden bis zur Auswerfung oder Ausbringung des Formteiles oder Gegenstandes.

Die Erfindung betrifft weiterhin die Verwendung der nach dem Negativtiefziehverfahren aus der Kunststoffschmelzbahn hergestellten Formteile oder Gegenstände, die vorzugsweise mit einer Schaumschicht an der Unterschicht oder Unterfolie und/oder einem Träger versehen sind für Kraftfahrzeuginnenverkleidung und Kraftfahrzeugteile, vorzugsweise für Schalttafeln, Konsolen, Seitenwände, Türpfosten und/oder Säulenverkleidungen.

Für das Verfahren gemäß der Erfindung wird eine Vorrichtungskombination verwendet, bestehend aus mindestens einem Extruder oder einer ähnlichen Plastifiziervorrichtung sowie einem Werkzeug zum Verformen des Extrudates, vorzugsweise zur Ausübung des erfindungsgemäßen Verfahrens. Gemäß der Erfindung ist das Werkzeug zum Verformen des Extrudates eine Negativtiefform oder Negativtiefziehform. Dem Breitschlitzextruder ist eine Kühlvorrichtung zugeordnet, die auf der der Negativtiefziehform abgewandten Fläche des Extrudates angeordnet ist, wobei das Werkzeug aus mindestens einem zweiteiligen Werkzeug besteht, das als ein Werkzeugteil mindestens eine Negativtiefziehform und als mindestens zweites Werkzeugteil ein Gegenwerkzeug und/oder Stempel und/oder einen Halte-, Abdicht- und/oder Spannrahmen enthält.

Nach einer vorzugsweisen Ausführungsform ist bzw. sind mindestens ein Werkzeugteil, vorzugsweise zwei Werkzeugteile, bewegbar angeordnet und der Positivstempel oder das Gegenwerkzeug ist ganz oder in Teilbereichen der Form, Formoberfläche oder Oberflächenstruktur der Negativtiefziehform angepaßt und weist diese in Positivform auf. Der Stempel und/oder das Gegenwerkzeug ist bzw. sind in Richtung der zu verformenden Schmelzbahn bewegbar angeordnet.

Die poröse oder mikroporöse Negativtiefform oder Negativtiefziehform ist in der Nähe ihrer Formoberfläche mit einer Kühlvorrichtung oder einem Kühlsystem versehen. Die auf einer Seite der Austrittsöffnung des Breitschlitzextruders angeordnete Kühlvorrichtung besteht aus mindestens einer Kühlwalze.

### Zeichnungsbeschreibung

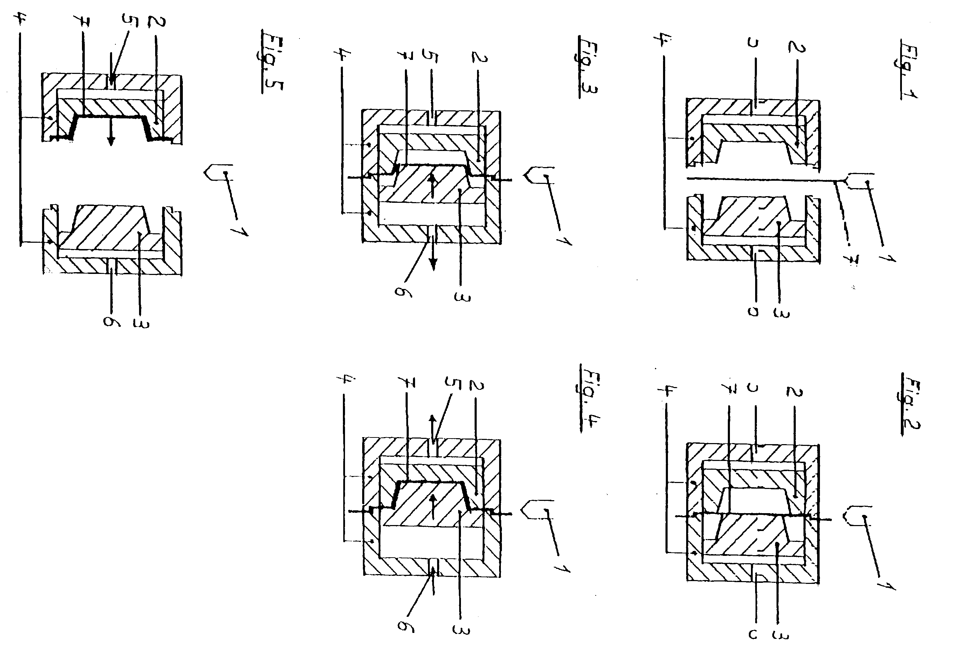

In den beigefügten Figuren 1 bis 5 ist ein Ausführungsbeispiel des erfindungsgemäßen Verfahrens schematisch wiedergegeben.

In Figur 1 wird die aus dem Extruder (1) austretende Kunststoffschmelzbahn (7) einer Vorkühlung auf der von der Negativtiefziehform (2) abgewandten Fläche unterworfen, so daß die der Negativtiefziehform zugewandte Fläche im heißen Zustand verbleibt. Die Kunststoffschmelzbahn wird nach dieser Ausführungsform frei nach unten hängend durch das geöffnete mehrteilige Werkzeug geführt, das aus den äußeren Werkzeugformteilen oder Werkzeugteilen (5 und 6) besteht, wobei in dem Werkzeugformteil (5) die Negativtiefziehform angeordnet ist, während das äußere Werkzeugformteil (6) den Stempel (3) oder ein Gegenwerkzeug enthält, der bzw. das ganz oder in Teilbereichen der Form, Formoberfläche oder Oberflächenstruktur der Negativtiefziehform angepaßt ist und/oder diese in Positivform aufweist. Durch eine Steuer- (4) oder Bewegungsvorrichtung kann das Werkzeug geschlossen und/oder geöffnet werden.

In Figur 2 wird das geschlossene Werkzeug dargestellt. Die Folienbahn (7) wird von dem äußeren Werkzeug oder dessen Rand, Haltevorrichtung oder einem Abdicht- oder Spannrahmen eingespannt, gehalten und abgedichtet, die Kunststoffschmelzbahn (7) wird während oder nach dem Schließen an der übrigen Kunststoffschmelzbahn abgetrennt oder ist bereits vor dem Schließen abgetrennt worden.

In Figur 3 ist die Vorformung innerhalb des Werkzeuges schematisch dargestellt. In dem äußeren Werkzeug und/oder in der Negativtiefziehform sind Anschlüsse für die Anlegung eines Druckes oder Unterdruckes angeordnet. Im Rahmen der Vorformung und des Negativtiefziehens wird von der Negativtiefziehform ein Unterdruck auf die Kunststoffschmelzbahn ausgeübt. Der profilierte Stempel und/oder das innere Werkzeug (3) unterstützt die Vorwölbung zur Negativtiefziehform.

In Figur 4 hat die Kunststoffschmelzbahn unter Verwendung des von der Negativtiefziehform aus angelegten Unterdruckes und/oder eines von dem Gegenwerkzeug und/oder dem Stempel ausgeübten Überdruckes die gewünschte Form des Tiefziehlings angenommen. Der Tiefziehling wird nach der Verformung gekühlt, insbesondere schockgekühlt, wobei nach einer vorzugsweisen Ausführungsform bereits der Stempel mit einer Kühlvorrichtung verbunden ist.

In Figur 5 wird dargestellt, daß der entstandene Tiefziehling nach Abkühlung entformt wird. Dabei wird nach einer bevorzugten Ausführungsform ein leichter Blasdruck von der Negativtiefziehform auf den Tiefziehling ausgeübt.

## Patentansprüche

1. Verfahren zur Herstellung von Formteilen oder Gegenständen für Kraftfahrzeuge, wobei Kunststoffbahnen in eine Negativtiefziehform eingebracht und in der Negativtiefziehform unter Narbgebung und/oder Oberflächendekoration verformt werden und die Narbgebung und/oder Oberflächendekoration durch eine poröse, luftdurchlässige, vorzugsweise mikroporöse luftdurchlässige Formoberfläche aufweisende Negativtiefziehform oder durch eine nicht poröse, genarbte oder eine Oberflächendekoration in Negativform enthaltende Formoberfläche erfolgt, dadurch gekennzeichnet, daß anstelle einer Kunststoffbahn eine aus einem Extruder (1) oder einer ähnlichen Plastifiziervorrichtung, vorzugsweise aus einem Breitschlitzextruder austretende Kunststoffschmelzbahn (7) verwendet wird, dabei die der Negativtiefziehform (2) abgewandte Fläche der Kunststoffschmelzbahn vor und/oder während der Vorformung der Kunststoffschmelzbahn einer Vorkühlung unterworfen und eine Temperaturdifferenz zwischen der heißeren, der Negativtiefziehform zugewandten Fläche der Kunststoffschmelzbahn und der der Negativtiefziehform abgewandten Fläche der Kunststoffschmelzbahn von 4 bis 37 K, vorzugsweise 10 bis 25 K, eingestellt wird, so daß sich auf der der Negativtiefziehform abgewandten Fläche eine selbsttragende Schmelzhaut bildet, wobei zwischen der Temperatur der Kunststoffschmelzbahn und der kälteren Negativtiefzieh- form ein Temparaturunterschied von mehr als 30 K, vorzugsweise mehr als 80 K, eingestellt wird und die Kunststoffschmelzbahn durch ein mindestens zweiteiliges Werkzeug (5, 6), das als ein Werkzeugteil (5) mindestens eine Negativtiefziehform und als mindestens zweites Werkzeugteil (6) ein Gegenwerkzeug und/oder Stempel (3) und/oder einen Halte-, Abdicht- und/oder Spannrahmen enthält, geführt, eingespannt, gehalten und/oder abgedichtet und abgetrennt sowie unter Verwendung der Negativtiefziehform und eines Druckunterschiedes, vorzugsweise Unterdruck, sowie unter Ausnutzung der Wärmekapazität der Kunststoffschmelzbahn geformt wird, wobei die Schmelzbahn die mikroporöse, genarbte, strukturierte, geformte und/oder mit Oberflächendekoration versehene Form der Negativtiefziehform annimmt und sofort um mehr als 70 K, vorzugsweise mehr als 100 K gekühlt oder schockgekühlt wird.

2. Verfahren nach Anspruch 1, dadurch gekennzeichnet, daß die Kunststoffschmelzbahn (7) frei nach unten hängend durch das geöffnete, mindestens zweiteilige Werkzeug (5, 6), von denen das eine Werkzeugteil (5) die Negativtiefziehform und einen Rand, Halte-, Abdicht- oder Spannrahmen und/oder ein Schließteil, das andere Werkzeugteil (6) ein Gegenwerkzeug und/oder Stempel (3) und einen Rand, Halte-, Abdicht- oder Spannrahmen und/oder Gegenschließteil enthält, geführt wird, wobei die gekühlte Seite der Schmelzbahn (7) der Öffnung oder Formoberfläche der Negativtiefziehform abgewandt ist, daß die Werkzeugteile oder dessen Ränder, Halte-, Abdicht- oder Spannrahmen oder Schließteile die Schmelzbahn halten, einspannen und abdichten, vorzugsweise durch Zufahren oder Schließen des Werkzeuges, das gleichzeitig oder später die im Werkzeug eingeschlossene Schmelzbahn (7) von der außerhalb des Werkzeuges angeordneten Schmelzbahn abtrennt, die in dem Werkzeug eingespannte und gehaltene Schmelzenbahn (7) unter Verwendung eines Unterdruckes und/oder durch Bewegung eines Stempels (3) oder Gegenwerkzeuges (6) zu der Negativtiefziehform vorgewölbt und nachfolgend in die Negativtiefziehform eingebracht und negativtiefgezogen wird.

3. Verfahren nach Ansprüchen 1 und 2, dadurch gekennzeichnet, daß ein Positivstempel (3) oder ein Gegenwerkzeug verwendet wird, der bzw. das ganz oder in Teilbereichen der Form, Formoberfläche oder Oberflächenstruktur der Negativtiefziehform angepaßt ist oder diese in Positivform aufweist, daß der Stempel (3) in Richtung der zu vorformenden und zu verformenden Schmelzbahn (7) vorgefahren wird und diese rückseitig gleichzeitig kühlt und/oder die rückseitige Kühlung durch Einblasen von Kühlgasen oder Einbringung von Kühlflüssigkeiten, vorzugsweise Einblasen von Luft von der Seite des Stempels (3) oder Gegenwerkzeuges (6) her, durchgeführt.

4. Verfahren nach einem oder mehreren der Ansprüche 1 bis 3, dadurch gekennzeichnet, daß die Vorkühlung der Kunststoffschmelzbahn (7) auf der der Negativtiefziehform abgewandten Fläche der Kunststoffschmelzbahn bereits unmittelbar nach dem Austritt aus dem Extruder (1) oder einem mit einer Austrittsöffnung versehenen Vorratsbehälter für die Schmelze erfolgt, ohne daß die der Negativtiefziehform zugewandten Fläche der Kunststoffschmelzbahn (7) einer zusätzlichen Kühlung unterworfen wird.

5. Verfahren nach einem oder mehreren der Ansprüche 1 bis 4, dadurch gekennzeichnet, daß die Kühlung der der Negativtiefziehform abgewandten Fläche der Kunststoffschmelzbahn (7) durch eine Kühlwalze, vorzugsweise unter Mitverwendung einer gegenüberliegenden Glättwalze, und/oder ein kühlendes Gas oder eine kühlende Flüssigkeit, vorzugsweise kalte Luft, durchgeführt wird.

6. Verfahren nach einem oder mehreren der Ansprüche 1 bis 5, dadurch gekennzeichnet, daß der Extruder (1) hinsichtlich der ausgestossenen Menge des Kunststoffextrudates diskontinuierlich oder intermittierend arbeitet, wobei die ausgestossene Menge des Kunststoffextrudates auf 0 oder auf eine geringere Ausstoßmenge, vorzugsweise während der Zeit des Tiefziehvorganges, eingestellt wird.

7. Verfahren nach einem oder mehreren der Ansprüche 1 bis 5, dadurch gekennzeichnet, daß der Extruder (1) hinsichtlich der ausgestossenen Menge des Kunststoffextrudates kontinuierlich arbeitet und das Extrudat in mindestens einen mit einer Breitschlitzdüse versehenen Vorratsbehälter eingebracht und von dort diskontinuierlich, vorzugsweise durch Steuerung der Öffnungsbreite der Austrittsdüse und/oder eines auf die im Vorratsbehälter gelagerte Schmelze ausgeübten Druckes, als Schmelzbahn ausgebracht wird.

8. Verfahren nach einem oder mehreren der Ansprüche 1 bis 7, dadurch gekennzeichnet, daß die Glättwalze temperierbar, vorzugsweise heizbar ist und die Folie bei dem Glättvorgang auf der gewünschten Arbeitstemperatur gehalten wird.

9. Verfahren nach einem oder mehreren der Ansprüche 1 bis 8, dadurch gekennzeichnet, daß die frei nach unten hängende Kunststoffschmelzbahn (7) durch ein Werkzeug, bestehend aus einem äußeren Werkzeug zur Einspannung, Halterung und/oder Abdichtung, das gleichzeitig als Halte- oder Spannrahmen ausgebil-det ist oder dient, geführt, die Kunststoffschmelzbahn (7) auf bestimmte Abmessungen abgetrennt und durch ein in dem äußeren Werkzeug angeordnetes inneres Werkzeug, enthaltend die Negativtiefziehform und einen Stempel (3), oder ein Gegenformwerkzeug thermoverformt wird.

10. Verfahren nach einem oder mehreren der Ansprüche 1 bis 9, dadurch gekennzeichnet, daß an der Vorderseite (zu prägende Seite durch die Negativtiefziehform) der Kunststoffschmelzbahn (7) durch eine Auftragswalze oder durch Aufsprühen ein Lack, eine Druck- und/oder Siegelschicht aufgetragen wird.

11. Verfahren nach einem oder mehreren der Ansprüche 1 bis 10, dadurch gekennzeichnet, daß auf die Rückseite der Kunststoffschmelzbahn vor dem Negativtiefziehvorgang vor, während und/oder nach der Kühlung eine Haft- und/oder Sperrschicht in Form einer Flüssigkeit oder Dispersion aufgebracht wird.

12. Verfahren nach einem oder mehreren der Ansprüche 1 bis 11, dadurch gekennzeichnet, daß die in vorbestimmten Abmessungen durch den Halte- oder Spannrahmen oder einem äußeren Werkzeug eingespannten, gehaltenen und/oder abgedichteten und/oder abgetrennten Kunststoffbahnen karusselartig geführt, während des Transportes oder bei kurzen Transportpausen in der Negativtiefziehform verformt werden, wobei die Tiefziehlinge (die negativtiefgezogenen Formteile oder Gegenstände) nach der Verformung und der Öffnung des Werkzeuges in der Negativtiefziehform und/oder am Rahmen oder am äußeren Werkzeug verbleiben und während des Weitertransportes zusätzlichen Arbeitsgängen unterworfen werden bis zur Auswerfung oder Ausbringung des Formteiles oder Gegenstandes.

## Claims

1. A method for producing moulded parts or items for motor vehicles, in which plastic webs are introduced into a negative deep-drawing mould and are shaped in the negative deep-drawing mould with embossing and/or surface decoration, and the embossing and/or surface decoration is performed by means of a negative deep-drawing mould having a porous, air-permeable, preferably microporous, air-permeable, mould surface, or by a non-porous mould surface which is embossed or contains a surface decoration in negative form, characterised in that a plastic melt web (7) emerging from an extruder (1) or a similar plasticising device, preferably from a slot die, is used instead of a plastic web, in so doing the surface of the plastic melt web remote from the negative deep-drawing mould (2) is subjected to preliminary cooling before and/or during the preforming of the plastic melt web and a temperature difference of 4 to 37 K, preferably 10 to 25 K, is set between the hotter surface of the plastic melt web which faces the negative deep-drawing mould and the surface of the plastic melt web remote from the negative deep-drawing mould, so that a self-supporting melt skin is produced on the surface remote from the negative deep-drawing mould, with a temperature difference of more than 30 K, preferably more than 80 K, being set between the temperature of the plastic melt web and the colder negative deep-drawing mould, and the plastic melt web is guided, clamped, held and/or sealed and separated by an at least two-part mould (5, 6), which comprises as one mould part (5) at least one negative deep-drawing mould and as at least the second mould part (6) a counter-mould and/or male plug (3) and/or a holding, sealing and/or clamping frame, and is shaped using the negative deep-drawing mould and a pressure difference, preferably underpressure, and utilising the heat capacity of the plastic melt web, the melt web assuming the form, which is microporous, embossed, textured, shaped and/or provided with surface decoration, of the negative deep-drawing mould and immediately being cooled or shock-cooled by more than 70 K, preferably more than 100 K.

2. A method according to Claim 1, characterised in that the plastic melt web (7) is guided, hanging freely downwards, through the opened, at least two-part mould (5, 6), of which one mould part (5) comprises the negative deep-drawing mould and an edge, holding frame, sealing frame or clamping frame and/or a closing part, and the other mould part (6) comprising a counter-mould and/or male plug (3) and an edge, holding frame, sealing frame or clamping frame and/or counter-closing part, the cooled side of the melt web (7) being remote from the opening or mould surface of the negative deep-drawing mould, that the mould parts or the edges, holding frames, sealing frames or clamping frames or closing parts thereof hold, clamp and seal the melt web, preferably by closing the mould, which simultaneously or later severs the melt web (7) enclosed in the mould from the melt web located outside the mould, the melt web (7) clamped and held in the mould is pre-curved using an underpressure and/or by the movement of a male plug (3) or counter-mould (6) to the negative deep-drawing mould and is subsequently introduced into the negative deep-drawing mould and negative deep-drawn.

3. A method according to Claims 1 and 2, characterised in that a positive die (3) or a counter-mould is used which is matched in its entirety or in partial regions to the shape, mould shape or surface texture of the negative deep-drawing mould or bears the latter in positive form, that the male plug (3) is advanced in the direction of the melt web (7) which is to be preformed and shaped and said web is simultaneously cooled on the reverse side and/or the reverse-side cooling is performed by blowing in cooling gases or introducing cooling liquids, preferably blowing in air from the side of the male plug (3) or counter-mould (6).

4. A method according to one or more of Claims 1 to 3, characterised in that the preliminary cooling of the plastic melt web (7) on the surface of the plastic melt web remote from the negative deep-drawing mould takes place already directly after emerging from the extruder (1) or a storage vessel for the melt which is provided with an exit opening, without the surface of the plastic melt web (7) facing the negative deep-drawing mould being subjected to additional cooling.

5. A method according to one or more of Claims 1 to 4, characterised in that the cooling of the surface of the plastic melt web (7) remote from the negative deep-drawing mould is performed by a cooling roller, preferably with the joint use of an opposing smoothing roll, and/or a cooling gas or a cooling liquid, preferably cold air.

6. A method according to one or more of Claims 1 to 5, characterised in that the extruder (1) operates discontinuously or intermittently with respect to the amount of plastics extrudate ejected, the amount of plastics extrudate ejected being set to 0 or to a lower ejection amount, preferably during the period of the deep-drawing operation.

7. A method according to one or more of Claims 1 to 5, characterised in that the extruder (1) operates continuously with respect to the amount of plastics extrudate ejected, and the extrudate is introduced into at least one storage vessel provided with a slot die, and is brought out discontinuously therefrom as a melt web, preferably by controlling the opening width of the exit nozzle or/or a pressure exerted on the melt stored in the storage vessel.

8. A method according to one or more of Claims 1 to 7, characterised in that the smoothing roll can be temperature-controlled, preferably can be heated, and the film is kept at the desired operating temperature during the smoothing operation.

9. A method according to one or more of Claims 1 to 8, characterised in that the plastic melt web (7) which hangs freely downwards is guided through a mould, consisting of an outer mould for clamping, holding and/or sealing, which at the same time is constructed or serves as a holding or clamping frame, the plastic melt web (7) is cut to certain dimensions and is thermoformed by an inner mould which is located in the outer mould and contains the negative deep-drawing mould and a male plug (3), or a counter-shaping mould.

10. A method according to one or more of Claims 1 to 9, characterised in that a paint, a printed layer and/or sealing layer is applied to the front side (side to be embossed by the negative deep-drawing mould) of the plastic melt web (7) by an applicator roller or by spraying.

11. A method according to one or more of Claims 1 to 10, characterised in that an adhesion layer and/or barrier layer is applied in the form of a liquid or dispersion to the reverse side of the plastic melt web before the negative deep-drawing operation before, during and/or after cooling.

12. A method according to one or more of Claims 1 to 11, characterised in that the plastic webs clamped, held and/or sealed and/or severed in predetermined dimensions by the holding or clamping frame or an outer mould are guided in carousel-like manner, are shaped in the negative deep-drawing mould during transport or during brief transport pauses, with the deep-drawn products (the negative-deep-drawn moulded parts or items) remaining in the negative deep-drawing mould and/or on the frame or on the outer mould after shaping and the opening of the mould, and while being transported on are subjected to additional operations until the moulded part or item is ejected or brought out.

## Revendications

1. Procédé de fabrication de pièces de forme ou d'objets pour véhicules, selon lequel des bandes de matière plastique sont disposées dans un moule d'emboutissage négatif et sont mises en forme dans ce moule d'emboutissage négatif avec grainage et/ou décoration superficielle, et le grainage et/ou la décoration superficielle sont produits par un moule d'emboutissage négatif comportant une surface de moulage poreuse, perméable à l'air, de préférence microporeuse et perméable à l'air ou bien par une surface de moulage située dans le moule négatif, non poreuse, grainée ou comportant une décoration superficielle,
caractérisé en ce que, à la place d'une bande de matière plastique, on utilise une bande plastifiée de matière plastique (7) sortant d'une extrudeuse (1) ou d'un dispositif de plastification analogue, de préférence d'une extrudeuse à filière plate, en ce que la surface de la bande plastifiée de matière plastique qui est située à l'opposé du moule d'emboutissage négatif (2) est soumise, avant et/ou pendant le préformage de la bande plastifiée de matière plastique, à un prérefroidissement, et une différence de température entre la surface chaude, dirigée vers le moule négatif, de la bande plastifiée de matière plastique et la surface de cette bande qui est opposée audit moule négatif est réglée de 4 à 37 K, de préférence de 10 à 25 K, de telle sorte qu'il se forme sur la surface opposée au moule négatif une pellicule plastifiée autoportante; en outre on règle entre la température de la bande plastifiée de matière plastique et le moule négatif plus froid une différence de température supérieure à 30 K, de préférence supérieure à 80 K et la bande plastifiée de matière plastique est soumise, - au moyen d'un outil (5,6) au moins en deux parties, qui comprend comme première partie d'outil (5) au moins un moule d'emboutissage négatif et au moins comme seconde partie d'outil (6) un contreoutil et/ou un poinçon (3) et/ou un châssis de maintien, d'étanchéité et/ou de serrage, - à un guidage, un serrage, un maintien et/ou une étanchéité et un sectionnement et également, elle est mise en forme avec utilisation du moule d'emboutissage négatif et d'une différence de pression, de préférence une dépression, et aussi avec utilisation de la capacité thermique de la bande plastifiée de matière plastique, ladite bande plastifiée prenant alors la forme microporeuse, grainée, texturée, moulée et/ou pourvue d'une décoration superficielle, du moule d'emboutissage négatif et étant soumise aussitôt à un refroidissement ou à une trempe de plus de 70 K, de préférence de plus de 100 K.

2. Procédé selon la revendication 1, caractérisé en ce que la bande plastifiée de matière plastique (7), pendant librement vers le bas, est guidée par l'outil au moins en deux parties (5,6), ouvert et dont une partie (5) comporte le moule d'emboutissage négatif, ainsi qu'un bord, un châssis de maintien, d'étanchéité ou de serrage et/ou une partie de fermeture, et l'autre partie (6) de l'outil comporte un contre-outil et/ou un poinçon (3), ainsi qu'un bord, un châssis de maintien, d'étanchéité ou de serrage, et/ou une contre-partie de fermeture, le côté refroidi de la bande plastifiée (7) étant situé à l'opposé de l'ouverture ou de la surface de moulage du moule d'emboutissage négatif, en ce que les parties de l'outil, ou ses bords, ses châssis de maintien, d'étanchéité ou de serrage ou ses parties de fermeture, maintiennent, serrent ou assurent l'étanchéité de la bande plastifiée, avantageusement par avancée ou fermeture de l'outil, qui sépare simultanément ou ultérieurement la bande plastifiée (7) enfermée dans l'outil de la bande plastifiée située à l'extérieur de l'outil, la bande plastifiée (7), serrée et maintenue dans l'outil étant soumise à un bombement préalable en utilisant une dépression et par mouvement d'un poinçon (3) ou d'un contre-outil (6) vers le moule d'emboutissage négatif et étant ensuite engagée dans le moule d'emboutissage négatif et emboutie négativement.

3. Procédé selon les revendications 1 et 2, caractérisé en ce qu'on utilise un poinçon positif (3) ou un contreoutil, qui est adapté complètement ou dans des zones partielles à la forme, à la surface de moulage ou à la structure superficielle du moule d'emboutissage négatif, ou bien qui possède ces particularités en positif, en ce que le poinçon (3) est avancé en direction de la bande plastifiée (7) à préformer et à mouler, et en ce que celle-ci est refroidie simultanément sur le côté arrière et/ou le refroidissement sur le côté arrière est effectué par soufflage de gaz de refroidissement ou introduction de liquides de refroidissement, de préférence par soufflage d'air depuis le côté du poinçon (3) ou du contre-outil (6).

4. Procédé selon une ou plusieurs des revendications 1 à 3, caractérisé en ce que le prérefroidissement de la bande plastifiée de matière plastique (7) sur sa surface opposée au moule d'emboutissage négatif est effectué déjà directement après la sortie hors de l'extrudeuse (1) ou d'un récipient de stockage de la matière fondue pourvu d'une ouverture de sortie, sans que la surface de la bande plastifiée (7) qui est dirigée vers le moule d'emboutissage négatif soit soumise à un refroidissement additionnel.

5. Procédé selon une ou plusieurs des revendications 1 à 4, caractérisé en ce que le refroidissement de la surface de la bande plastifiée (7) qui est opposée au moule d'emboutissage négatif est effectué par un cylindre de refroidissement, de préférence avec utilisation simultanée d'un cylindre de lissage opposé, et/ou par un gaz de refroidissement ou un liquide de refroidissement, de préférence de l'air froid.

6. Procédé selon une ou plusieurs des revendications 1 à 5, caractérisé en ce que l'extrudeuse (1) opère de façon discontinue ou intermittente en ce qui concerne la quantité éjectée d'extrudat de matière plastique, cette quantité éjectée d'extrudat de matière plastique étant réglée à 0 ou à une quantité éjectée plus petite, de préférence pendant la durée du processus d'emboutissage.

7. Procédé selon une ou plusieurs des revendications 1 à 5, caractérisé en ce que l'extrudeuse (1) opère de façon continue en ce qui concerne la quantité éjectée d'extrudat de matière plastique et l'extrudat est introduit dans au moins un récipient de stockage pourvu d'une buse à fente large et est évacué de celui-ci de façon discontinue sous forme d'une bande plastifiée, de préférence par commande de la largeur d'ouverture de la buse de sortie et/ou d'une pression exercée sur le bain fondu situé dans le récipient de stockage.

8. Procédé selon une ou plusieurs des revendications 1 à 7, caractérisé en ce que le cylindre de lissage peut être tempéré, en étant de préférence chauffable, et la feuille est maintenue pendant le processus de lissage à la température de travail désirée.

9. Procédé selon une ou plusieurs des revendications 1 à 8, caractérisé en ce que la bande plastifiée de matière plastique (7), pendant librement vers le bas, est guidée par un outil, se composant d'un outil extérieur pour assurer une fixation, un maintien et/ou une étanchéité, qui est agencé simultanément comme un châssis de maintien ou de serrage ou qui remplit sa fonction, la bande plastifiée de matière plastique (7) est sectionnée à des dimensions déterminées et elle est mise en forme thermiquement par un outil intérieur, disposé dans l'outil extérieur et contenant le moule d'emboutissage négatif et un poinçon (3) ou un contre-outil de moulage.

10. Procédé selon une ou plusieurs des revendications 1 à 9, caractérisé en ce que sur le côté avant (côté à empreindre par le moule d'emboutissage négatif) de la bande plastifiée de matière plastique; (7), on dépose un vernis, une couche d'impression et/ou de scellement par un cylindre de dépôt ou par pulvérisation.

11. Procédé selon une ou plusieurs des revendications 1 à 10, caractérisé en ce que sur le côté arrière de la bande plastifiée de matière plastique, on dépose, avant le processus d'emboutissage négatif, avant, pendant et/ou après le refroidissement, une couche d'adhérence et/ou d'arrêt sous la forme d'un liquide ou d'une dispersion.

12. Procédé selon une ou plusieurs des revendications 1 à 11, caractérisé en ce que les bandes de matière plastique serrées, maintenues et/ou étanchées et/ou sectionnées à des dimensions prédéterminées par les châssis de maintien ou de serrage ou par un outil extérieur sont guidées à la façon d'un carrousel, elles sont mises en forme dans le moule d'emboutissage négatif pendant le transport ou lors de courtes pauses dans le transport, les ébauches embouties (les pièces de forme ou objets emboutis négativement) restant, après la mise en forme et l'ouverture de l'outil, dans le moule d'emboutissage négatif et/ou sur le châssis ou sur l'outil extérieur et étant soumis, pendant la suite du transport, à des opérations additionnelles jusqu'à l'éjection ou l'évacuation de la pièce de forme ou de l'objet.
